# EUROPÄISCHE PATENTSCHRIFT

(11) **EP 0 910 996 B1**
(45) Veröffentlichungstag und Bekanntmachung des Hinweises auf die Patenterteilung: **10.09.2003**
(21) Anmeldenummer: 97810794.4
(22) Anmeldetag: 27.10.1997
(51) Int. Cl.: A61C 5/12

(54) **Vorrichtung zur Fixierung und Anpassung einer Matrize für die Zahnbehandlung**
Device for the fixation and adaptation of a matrix for dental treatment
Dispositif de fixation et d'adaptation d'une matrice pour traitement dentaire

(43) Veröffentlichungstag der Anmeldung: 28.04.1999
(73) Patentinhaber: Geno Know-How Sarnen AG, 6060 Sarnen (CH)
(72) Erfinder: Hugo, Burkhard, Dr., 97265 Hettstadt (DE)
(74) Vertreter: AMMANN PATENTANWAELTE AG BERN

(56) Entgegenhaltungen:
- US-A- 3 628 249
- US-A- 4 004 345
- US-A- 5 607 302

## Beschreibung

Die vorliegende Erfindung bezieht sich auf eine Vorrichtung zur Fixierung und Anpassung einer Matrize an die zu behandelnde Stelle eines Zahnes gemäss Oberbegriff von Patentanspruch 1, wobei es sich insbesondere um ein approximales Matrizensystem handelt.

In der US-A-5 607 302 ist eine Vorrichtung zum Zurückhalten einer Matrize für die Zahnbehandlung beschrieben, wobei dieser Matrizenspanner das Ziel verfolgt, einen optimalen Kontakt zum Nachbarzahn herzustellen. Dieser Matrizenspanner besteht in der Hauptsache aus einem Ringspanner, der mit starker Federkraft arbeitet. Dabei sind dessen Enden kugel- oder zylinderförmig und entsprechen einem quergestellten Ring, wobei die Enden durch Eingreifen in Unterschnitte des Zahnes oder mittels einer haftenden Beschichtung verankert werden. Dabei sind relativ hohe Klammerkräfte nötig, während die Klammerenden nur punktförmig auf die Matrize wirken, wodurch keine genügende Anpassung der Matrize an die Zahnkontur erfolgt. Es sind ferner ähnliche Produkte auf dem Markt, wobei ein Spannring mit kugelförmigen Enden auf eine Matrize drückt.

Es ist von diesem Stand der Technik ausgehend Aufgabe der vorliegenden Erfindung, eine Vorrichtung zur Fixierung einer Matrize für die Zahnbehandlung zu schaffen, die einerseits einen geringeren Anpressdruck benötigt und andererseits durch eine randdichte Adaptation des anliegenden Matrizenteils einen Überschuss von Füllungsmaterial vor allem im lateralen und lateral-zervikalen Kavitätenrandbereich vermeidet.

Diese Aufgabe wird mit einer Vorrichtung gemäss Patentanspruch 1 gelöst. Weitere Vorteile und Ausführungsformen sind in den abhängigen Ansprüchen definiert.

Die Erfindung wird im folgenden anhand einer Zeichnung eines Ausführungsbeispiels näher erläutert.
- Figur 1: zeigt in perspektivischer Sicht ein erstes Ausführungsbeispiel einer erfindungsgemässen Vorrichtung;
- Figur 2: zeigt in einer Okklusalansicht die Anwendung der Vorrichtung von Fig. 1 an zwei benachbarten Zähnen;
- Figur 3: zeigt die Lateralansicht von Fig. 2;
- Figur 4: zeigt in einer Okklusalansicht ein zweites Ausführungsbeispiel;
- Figur 5: zeigt in einer Okklusalansicht ein weiteres Ausführungsbeispiel;
- Figur 6: zeigt in einer Okklusalansicht ein Ausführungsbeispiel mit pneumatischer Betätigung; und
- Figur 7: zeigt die Vorrichtung von Figur 6 in einer Lateralansicht.

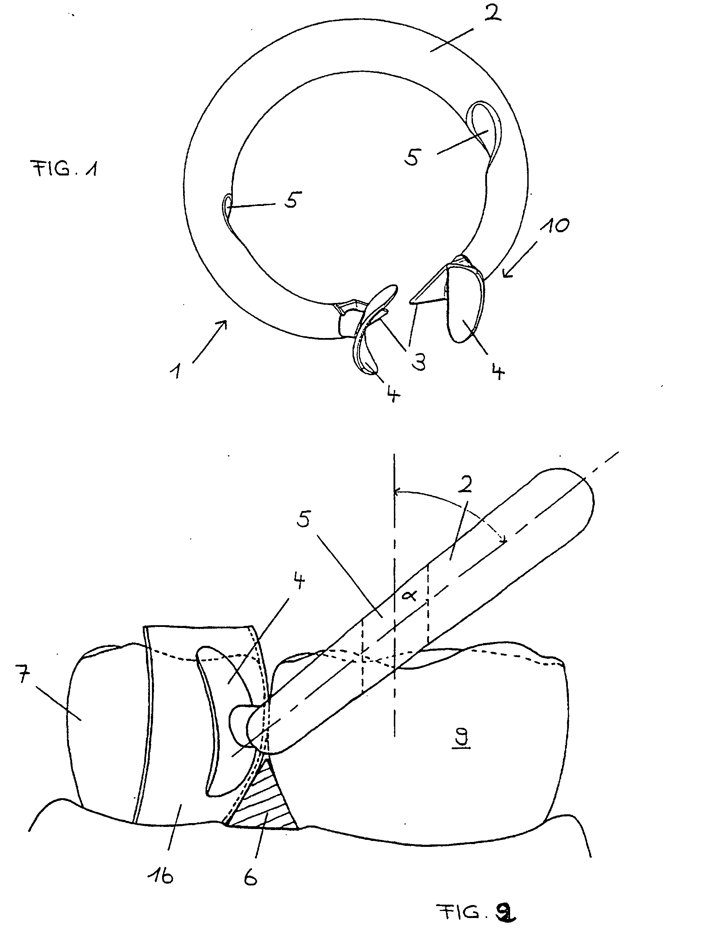

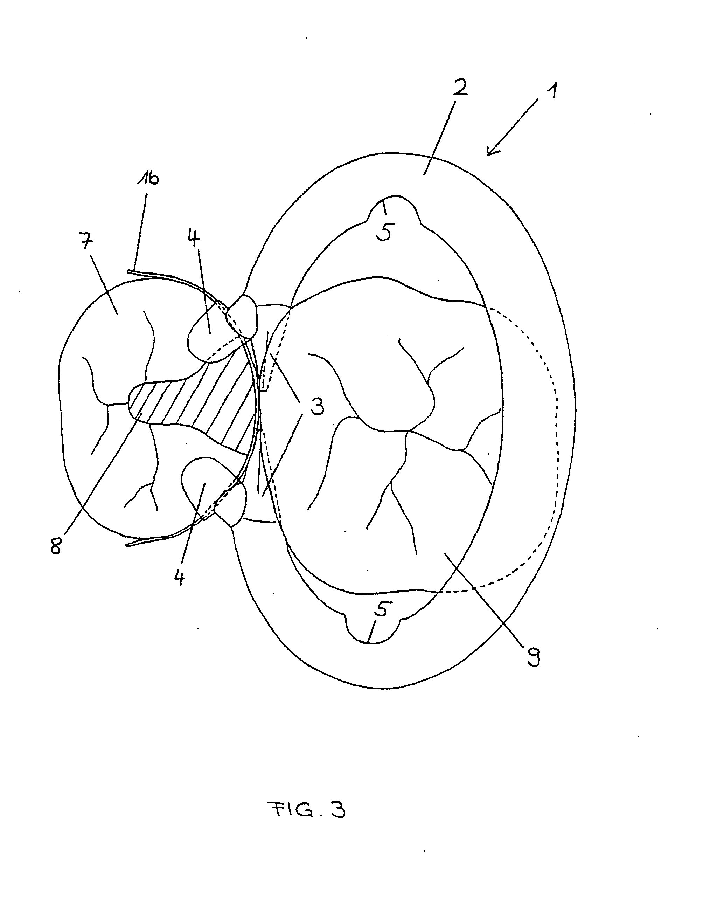

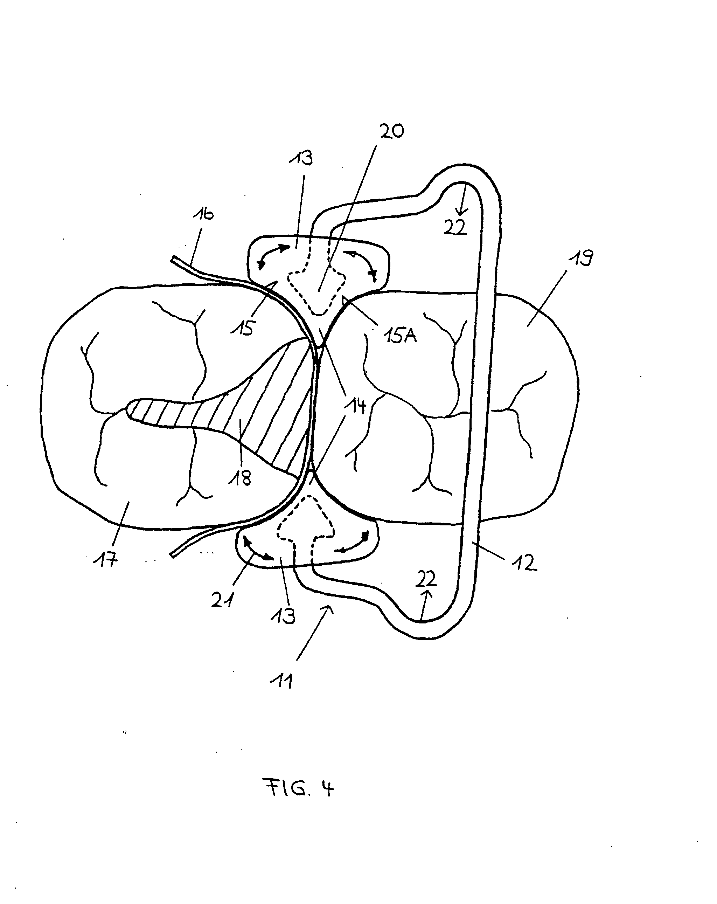

Die Vorrichtung 1 zur Fixierung und Anpassung einer Matrize gemäss Figur 1 besteht im wesentlichen aus einer Spannklammer 2, Verankerungselementen 3 und Adaptationselementen 4, wobei die Verankerungs- und Adaptationselemente zusammen geformte Polster 10 bilden. Die Spannklammer 2 ist als offener Kunststoff- oder Metallring ausgebildet und weist zwei sich unter einem Winkel α von 50°-70° bezüglich der Ringebene erstreckende Eingriffsöffnungen 5 für eine Spannzange auf, wobei sich die Öffnungen bei korrekt angelegter Spannklammer senkrecht zur Okklusal-Fläche erstrecken, siehe Figur 3. Die Spannzange kann eine handelsübliche Kofferdamzange oder eine andere Spreizvorrichtung in Form einer Spannzange sein.

Eine solche Spannzange könnte beispielsweise wie eine Wäscheklammer ausgebildet sein. Sie dient dazu, die Spannklammer beim Anlegen an den Zahn zu spreizen und nach Plazierung an der gewünschten Stelle zu entspannen, wonach sie wieder entfernt wird. Es kann sich als zweckmässig erweisen, die Adaptationselemente abnehmbar, bzw. austauschbar an der Spannklammer zu befestigen.

Die Verankerungselemente 3 dienen dazu, eine bukkale bzw. orale Verspannung, d. h. eine laterale Verkeilung der Polster herbeizuführen und gleichzeitig zu beiden Seiten der interdentalen Kavitätenbegrenzung die Adaptationselemente an die Zahnoberfläche anzupressen. Dabei wird die dünnschichtige Kunststoff- oder Stahlmatrize 16 konturgerecht und individuell im lateralen Kavitäten-Randbereich, bzw. im Uebergangsbereich zur gesunden Zahnsubstanz, angepasst, siehe Figur 2 mit dem zu behandelnden Zahn 7, Kavität 8 und benachbarten Zahn 9.

Zusätzlich zur Matrizenadaptation wird die Matrize in Richtung approximales Kontaktareal gedrückt, dabei jedoch nicht weggezogen. Der durch die Matrize überspannte Bereich wird so konvex ausgeformt. Durch das Prinzip der Matrizenadaptation wird die approximale Ueberschussbildung vermieden, wodurch die Anwendung von mittelviskosem, spritzfähigem Füllungsmaterial ermöglicht wird. Insbesondere bewirkt diese Vorrichtung eine flächige Matrizenadaptation an bombierte Zahnareale und dies ohne Spalträume zwischen Zahn 7 und Matrize 16.

Die zervikale Adaptation der Matrize an den Zahn und die Trennung des Approximalkontaktes erfolgt dabei in herkömmlicher Weise mit Holz- oder transparenten Kunststoffkeilen 6, siehe Figur 3.

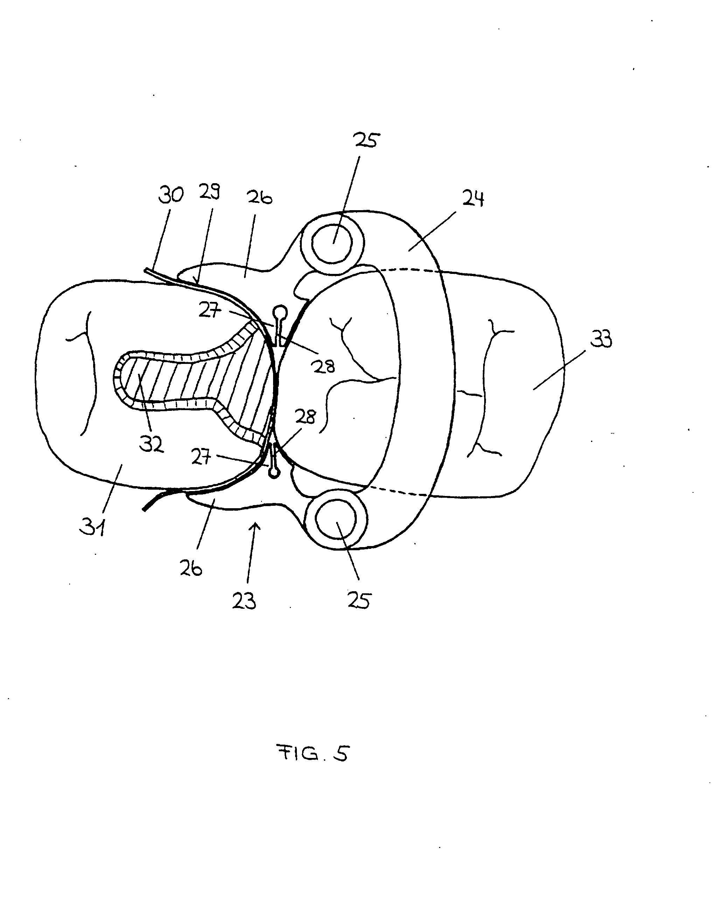

Im Ausführungsbeispiel gemäss Figur 4 erkennt man eine Spannvorrichtung 11 mit der Spannklammer 12, an der zwei Polster 13 aus Silikon aufsteckbar und austauschbar angeordnet sind. Die Polster 13 haben, wie aus Figur 3 hervorgeht, einen etwa keilförmigen Grundriss, wobei die Keilspitze 14 zwischen zwei Zähnen zu liegen kommt und die Adaptationsseite 15 des Keils jeweils ein Matrizenband 16 formschlüssig und flächig festhält, während sich der zweite. Schenkel 15A am angrenzenden Zahn 19 abstützt.

Man erkennt in Figur 4, die eine Okklusalansicht darstellt, links den zu behandelnden Zahn 17 mit der Kavität 18, die mit einer Kompositfüllung auszufüllen ist. Der rechte, angrenzende Zahn 19 steht in diesem Beispiel nicht zur Behandlung an. Falls das Polster 13 gelenkig an der Halterung 20 an der Spannklammer aufgesteckt ist, ergibt sich eine Selbstjustierung des Polsters, wie mit den Doppelpfeilen 21 angedeutet ist. Mit den Pfeilen 22 sind die Angriffspunkte für die Spannzange dargestellt. Statt Polster aus Silikon können Polster aus einem anderen, nachgiebigen Material verwendet werden, wobei zu beachten ist, dass bei der Verwendung dieser Klemmvorrichtung für Komposit-Materialien die Polster durchsichtig sein sollten.

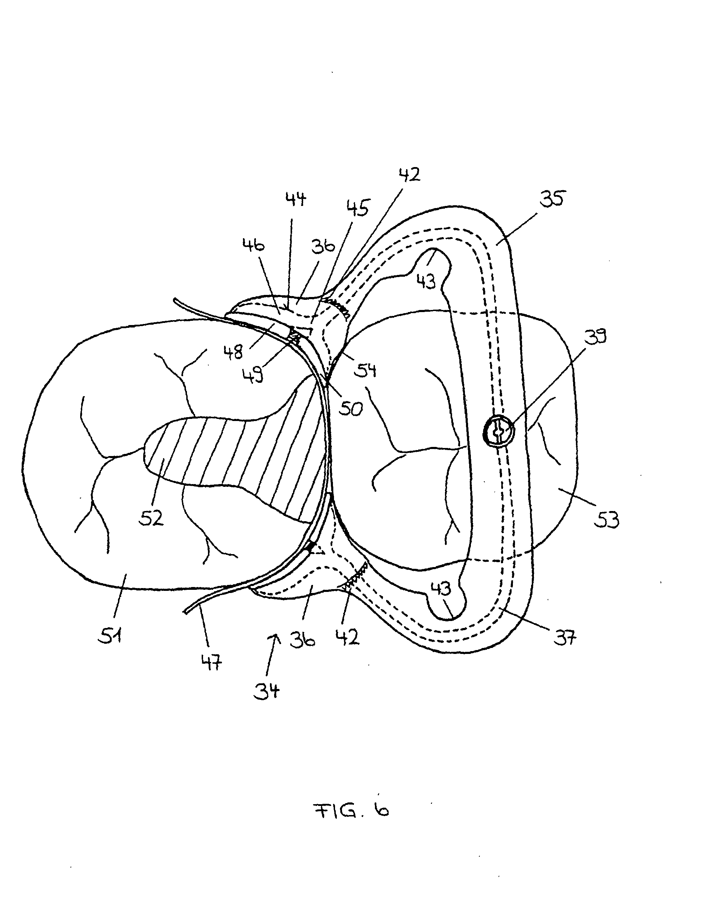

Die Klemmvorrichtung 23 gemäss Figur 5 weist eine Spannklammer 24 auf, die mit Eingriffsöffnungen 25 für die Spannzange versehen ist, die die gleiche Neigung α bezüglich der Ringebene aufweisen wie im ersten Ausführungsbeispiel und an ihren Enden je ein geformtes Polster 26 aufweist. Diese geformten Polster 26 sind gelenkig und gegebenenfalls abnehmbar an der Spannklammer 24 befestigt und weisen einen keilförmigen Teil mit Schlitz 28 auf, um eine bessere Anpassung an die Zahnformen zu gewährleisten. Vorzugsweise bestehen die Polster aus einem Silikonmaterial oder aus einem Material mit ähnlich elastischen und selbstverständlich zahnhygienischen Eigenschaften. Dem keilförmigen Teil schliesst sich ein Adaptationsteil 29 an, um die Matrize 30 flächig und formschlüssig an den zu behandelnden Zahn 31 mit Kavität 32 anzupressen. Auf der anderen Seite stützt sich das Polster formschlüssig auf den angrenzenden Zahn 33 ab.

Als Matrizenbänder bzw. Matrizenfolien für die in der Regel lichthärtenden Füllungsmaterialien sind transparente Ausführungen notwendig. Für einzelne interdentale Versorgungen sind partielle Interdentalmatrizen, sogenannte Teilmatrizen, geeignet. Zur besseren Anpassung an die Zahnformen können Bombierungen der Matrize für unterschiedliche Krümmungen, z. B. bei Molaren, Prämolaren oder Frontzähne sinnvoll sein. Zum interdentalen Einfädeln können kurze, beispielsweise 6 mm lange, bandförmige Metallteile der Matrize dienen, wobei der Metallteil nach dem Positionieren an der Verbundstelle abgerissen werden kann. Für mehrflächige Kavitäten können auch offene Matrizen, beispielsweise mit Metalleinfadelhilfen, Anwendung finden. Ferner können zum individuellen Abdichten und Adaptieren klebrige, lichthärtende Kunststoffe von spritzfähiger Konsistenz verwendet werden.

Die Anpresspolster müssen nicht notwendigerweise aus einem Kunststoff oder Silikon bestehen, sondern sie können auch aus einem entsprechend geformten, haftend beschichteten Metalldraht bestehen, wobei das Polster, zusammen mit den Spannklammerenden, an denen die Polster befestigt sind, Keil- oder V-förmig ausgebildet sind. Die Angriffspunkte der Polster befinden sich in der Regel in Unterschnitten unter dem Zahnäquator, um ein Abrutschen nach okklusal zu verhindern. Die Polster sind derart ausgestattet, dass sie sich selbsttätig durch Einpressen in unterschnittige Bereiche, die bukkal, lingual oder interdental-zervikal liegen können, verankern.

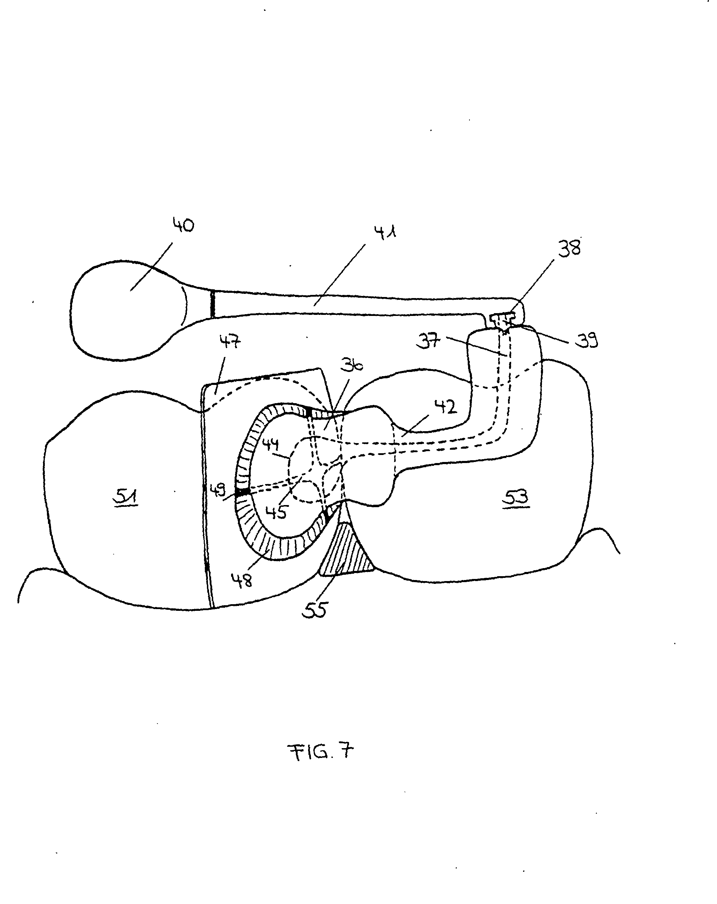

In den Figuren 6 und 7 ist eine Vorrichtung zum Befestigen und Anpassen einer Matrize dargestellt, bei der mit Hilfe eines pneumatisch erzeugten Druckes die Matrize besser und formschlüssiger angepasst werden kann. Die Vorrichtung 34 weist wie die vorhergehenden Vorrichtungen eine Spannklammer 35 auf, an deren Enden geformte Polster 36 angebracht sind. Die Spannklammer 35 ist hohl und enthält einen Luftkanal 37 mit einem Einlass 38 mit Rückschlagventil 39, wobei an den Einlass 38 ein Blasbalg 40 mit Zuleitung 41 anschliessbar ist. Die Spannklammer ist vorzugsweise aus einem durchsichtigen Kunststoff gefertigt und besitzt bei der Übergangsstelle zum Polster einen weicheren Abschnitt 42, der als Gelenkstelle dient.

Die Spannklammer weist ferner zwei Angriffspunkte 43 zum Ansetzen der Spannzange auf. Das geformte Polster 36 besteht im wesentlichen aus einer durchsichtigen, relativ steifen Kunststoffkappe 44, die am weicheren Abschnitt befestigt ist und einen Luftdurchlass 45 aufweist, der in ein Luftkissen 46 mündet. Das Luftkissen 46 kann eine gummiartige Oberfläche aufweisen, die direkt auf die Matrize 47 wirkt oder es können sich dem Luftkissen Gummisegmente 48 anschliessen, die je über ein Gelenk 49 miteinander verbunden sind und auf die Matrize 47 wirken. Das Polster weist gemäss der okklusalen Ansicht von Figur 6 einen keilförmigen Teil 50 auf, der sich zwischen den zu reparierenden Zahn 51 mit Kavität 52 und den angrenzenden Zahn 53 schiebt, wobei der Keil zum formschlüssigen Anpressen der Matrize einen Adaptationsseite mit den Gummisegmenten 48 und ein Widerlager 54 bildet, das sich auf den gesunden Zahn 53 abstützt. Durch Aufblasen des Luftkissens ist es möglich, die Klemmkraft der Spannklammer zu verstärken und eine noch bessere Anpassung des Polsters bzw. der Gummisegmente an die Form des Zahnes durchzuführen, um die dünne Matrizenfolie formschlüssig und dicht dem Zahn anzupassen.

In Figur 7 ist ferner schematisch ein herkömmlicher Keil 55 im Querschnitt dargestellt. Dabei kann es sich um einen durchsichtigen lichtleitenden Keil, gegebenenfalls mit Teilen aus Holz oder Kunststoff, handeln, der störungsfrei zum lateralen Adaptationssystem angebracht werden kann. Für solche Zwecke kann es notwendig sein, herkömmliche Keile abzuändern, d. h. v. a. deren zervikal-okklusale Dicke zu reduzieren. Dadurch erhalten die modifizierten Keile einen trapezförmigen Querschnitt.

## Patentansprüche

1. Vorrichtung zur Fixierung und Anpassung einer Matrize an die zu behandelnden Stelle eines Zahnes, mit einer Spannklammer (2, 12, 24; 35) zur Fixierung einer Matrize, **dadurch gekennzeichnet, dass** die Enden der Spannklammer (2, 12, 24; 35) mit je einem keilförmig geformten Polster (10, 13, 26, 36) mit Spitze (3, 14, 27; 50) versehen sind und das ein Adaptationelement (4) oder eine Adaptationsseite (15, 29; 48) aufweist, um die Matrize (16, 30, 47) formschlüssig an die Kontur des Kavitäten-Randbereichs des zu behandelnden Zahns (7, 17, 31, 51) anzupressen.

2. Vorrichtung nach Anspruch 1, **dadurch gekennzeichnet, dass** die Polster (10, 13, 26, 36) aus durchsichtigem Kunststoff, insbesondere Silikon, gefertigt sind.

3. Vorrichtung nach Anspruch 1 oder 2, **dadurch gekennzeichnet, dass** die Polster (10, 13, 26, 36) abnehmbar und/oder gelenkig an den Enden der Spannklammer (2, 12, 24; 35) befestigt sind.

4. Vorrichtung nach einem der Ansprüche 1 bis 3, **dadurch gekennzeichnet, dass** die Polster (26) zwecks besserer Anpassung einen Schlitz (28) aufweisen.

5. Vorrichtung nach einem der Ansprüche 1 bis 4, **dadurch gekennzeichnet, dass** die Polster (36) ein aufblasbares Luftkissen (46) enthalten.

6. Vorrichtung nach Anspruch 5, **dadurch gekennzeichnet, dass** sie eine Einrichtung zum Aufblasen des Luftkissens aufweist, die einen Blasbalg (40) enthält, der über eine Leitung (41) mit einem Einlass (38) mit Rückschlagventil (39) in der Spannklammer (35) mit den Luftkissen verbunden ist.

7. Vorrichtung nach Anspruch 5 oder 6, **dadurch gekennzeichnet, dass** die Spannklammer (35) an der Uebergangsstelle zum Polster (36) einen weicheren Abschnitt (42) aufweist, der als Gelenk dient.

8. Vorrichtung nach einem der Ansprüche 1 bis 7, **dadurch gekennzeichnet, dass** die Spannklammer (2, 12, 24; 35) mit zwei Eingriffsöffnungen (5, 25) oder zwei Angriffszonen (22, 43) zum Spreizen mit einer Spannzange versehen ist, wobei sich die Eingriffsöffnungen in Bezug auf die durch die Spannklammer definierte Ebene unter einen Winkel α von 50° - 70° erstrecken.

9. Vorrichtung nach einem der Ansprüche 1 bis 8, **dadurch gekennzeichnet, dass** die Spannklammer (2, 12, 24; 35) aus Metall oder Kunststoff gefertigt ist.

## Claims

1. Device for the fastening and adaptation of a matrix to the treated portion of a tooth, comprising a tension clamp (2, 12, 24; 35) for the fastening of a matrix, **characterised in that** the ends of the tension clamp (2, 12, 24; 35) are each provided with a wedge-shaped cushion (10, 13, 26, 36) with a point (3, 14, 27; 50) and comprising an adaptation element (4) or an adaptation side (15, 29; 48) in order to press the matrix (16, 30, 47) against the contour of the border area of the cavity of the treated tooth (7, 17, 31, 51) in a formfitting manner.

2. Device according to claim 1, **characterised in that** the cushions (10, 13, 26, 36) are made of a transparent synthetic material, more particularly of silicon.

3. Device according to claim 1 or 2, **characterised in that** the cushions (10, 13, 26, 36) are attached to the ends of the tension clamp (2, 12, 24; 35) in a removable and/or articulated manner.

4. Device according to one of claims 1 to 3, **characterised in that** the cushions (26) comprise a slot (28) for an improved adaptation.

5. Device according to one of claims 1 to 4, **characterised in that** the cushions (36) comprise an inflatable air cushion (46).

6. Device according to claim 5, **characterised in that** it comprises a device for inflating the air cushion that includes a bellows (40) connected to the air cushions by a pipe (41) to an inlet (38) of the tension clamp (35) which is provided with a check valve (39).

7. Device according to claim 5 or 6, **characterised in that** the transition between the tension clamp (35) and the cushion (36) comprises a softer portion (42) serving as an articulation.

8. Device according to one of claims 1 to 7, **characterised in that** the tension clamp (2, 12, 24; 35) is provided with two inserting openings (5, 25) or two contact areas (22, 43) for spreading it apart by means of tensioning pliers, the inserting openings extending at an angle α of 50° to 70° with respect to the plane defined by the tension clamp.

9. Device according to one of claims 1 to 8, **characterised in that** the tension clamp (2, 12, 24; 35) is made of metal or of a synthetic material.

## Revendications

1. Dispositif de fixation et d'adaptation d'une matrice à la partie sous traitement d'une dent, comprenant un crampon de serrage (2, 12, 24; 35) pour la fixation d'une matrice, **caractérisé en ce que** les extrémités du crampon de serrage (2, 12, 24; 35) sont munies d'un coussin (10, 13, 26, 36) cunéiforme avec pointe (3, 14, 27; 50) et comportant un élément d'adaptation (4) ou un côté d'adaptation (15, 29; 48) afin de presser la matrice (16, 30, 47) contre les contours de la zone en bordure de la cavité de la dent sous traitement (7, 17, 31, 51) et de l'y conformer.

2. Dispositif selon la revendication 1, **caractérisé en ce que** les coussins (10, 13, 26, 36) sont fabriqués en matière synthétique transparente, plus particulièrement en silicone.

3. Dispositif selon la revendication 1 ou 2, **caractérisé en ce que** les coussins (10, 13, 26, 36) sont fixés de manière amovible et/ou orientable aux extrémités du crampon de serrage (2, 12, 24; 35).

4. Dispositif selon l'une quelconque des revendications 1 à 3, **caractérisé en ce que** les coussins (26) comportent une fente (28) pour permettre une meilleure adaptation.

5. Dispositif selon l'une quelconque des revendications 1 à 4, **caractérisé en ce que** les coussins (36) contiennent un coussin à air (46) gonflable.

6. Dispositif selon la revendication 5, **caractérisé en ce qu'**il comprend un dispositif permettant de gonfler le coussin à air, ledit dispositif comprenant un soufflet (40) relié aux coussins à air par une conduite (41) à une admission (38) avec soupape de non-retour (39) dans le crampon de serrage (35).

7. Dispositif selon l'une des revendications 5 ou 6, **caractérisé en ce que** le crampon de serrage (35) comporte à la transition au coussin (36) une partie plus souple (42) servant d'articulation.

8. Dispositif selon l'une quelconque des revendications 1 à 7, **caractérisé en ce que** le crampon de serrage (2, 12, 24; 35) est pourvu de deux ouvertures d'engagement (5, 25) ou de deux zones d'attaque (22, 43) pour l'écartement de celui-ci au moyen d'une pince d'écartement, les ouvertures d'engagement s'étendant à un angle a de 50° à 70° par rapport au plan défini par le crampon de serrage.

9. Dispositif selon l'une quelconque des revendications 1 à 8, **caractérisé en ce que** le crampon de serrage (2, 12, 24; 35) est fabriqué en métal ou en matière synthétique.
